# EUROPEAN PATENT APPLICATION

(11) **EP 4 640 777 A1**
(43) Date of publication of application: **29.10.2025**
(21) Application number: 23906527.9
(22) Date of filing: 13.11.2023
(51) Int. Cl.: C09J 4/06, B32B 27/32, B65D 65/40, C09J 4/02, C09J 5/00, C09J 109/00, C09J 175/04

(54) **ACTIVE ENERGY RAY-CURABLE ADHESIVE COMPOSITION, METHOD FOR PRODUCING LAMINATE, LAMINATE, AND PACKAGING MATERIAL USING SAME**

(30) Priority: 22.12.2022 JP 2022205299; 22.12.2022 JP 2022205300
(71) Applicant: Toray Industries, Inc., Tokyo 103-8666 (JP)
(72) Inventor: TSUJI, Yuichi, Otsu-shi, Shiga 520-8558 (JP); YAMAMOTO, Chihiro, Otsu-shi, Shiga 520-8558 (JP); INOUE, Takejiro, Otsu-shi, Shiga 520-8558 (JP)
(74) Representative: Kador & Partner Part mbB
(86) International application number: PCT/JP2023/040696
(87) International publication number: WO 2024/135156

(57) **Abstract**

An object of the present invention is to provide an active energy ray-curable adhesive composition having a low environmental load that has excellent curability, provides a cured film having flexibility, and can exhibit sufficient adhesion even to a film without having an easy adhesion layer, and a laminate suitable as a packaging material. The present invention proposes an active energy ray-curable adhesive composition including: a conjugated diene polymer (A) which is liquid at 25°C and 1 atm; a polyfunctional (meth)acrylate (B); a polyol compound (C); and a polyisocyanate compound (D), and a laminate using the composition, and applications for packaging materials.

## Description

### Technical Field

The present invention relates to an active energy ray-curable adhesive composition, a production method of a laminate, a laminate, and a packaging material using the laminate.

### Background Art

As the global population increases, demand for flexible packaging, which is used primarily for food and household goods, is expected to continue to grow. In flexible packaging, from the viewpoint of protecting the contents, improving impact resistance, and providing heat sealability, it is common to adhere plastic film, metal foil, heat-melting film (sealant), etc., which impart the characteristics required for each application, to printed materials which is a film with a print applied thereon (hereinafter referred to as a "printed film material").

It is proposed that different material is usually adhered to the printed film material using an adhesive for laminate that contains a polyisocyanate component and a polyol component, and thus laminates with excellent solvent resistance, even to highly polar solvents, and printed packaging materials are obtained (Patent Literature 1). However, such an adhesive for laminate contains a large amount of organic solvent such as toluene or ethyl acetate at the time of coating, and therefore requires a large amount of energy to dry the solvent and treat the exhaust gas, resulting in a large environmental load. Furthermore, in recent years, there have been demands to reduce volatile components contained in the adhesive in response to environmental issues and carbon neutrality.

For this reason, Patent Literature 2 proposes a laminated film using an active energy ray-curable adhesive including an aromatic acrylate ester monomer and a resin.

### Citation List

### Patent Literature

Patent Literature 1: JP 5657990 B
Patent Literature 2: JP 8-253736 A

### Summary of Invention

### Technical Problem

In Patent Literature 2, however, the laminated film is formed by electron beam irradiation, but the cured film lacks flexibility after the adhesive has cured. In addition, the product number of the film that can be used is limited to those that require an easy adhesion layer, which disadvantageously makes it less versatile.

Therefore, an object of the present invention is to provide an active energy ray-curable adhesive composition having a low environmental load that has excellent curability, provides a cured film having flexibility, and can exhibit sufficient adhesion even to a film without having an easy adhesion layer.

### Solution to Problem

The present invention relates to an active energy ray-curable adhesive composition including: a conjugated diene polymer (A) which is liquid at 25°C and 1 atm; a polyfunctional (meth)acrylate (B); a polyol compound (C); and a polyisocyanate compound (D).

Moreover, the present invention relates to a production method of a laminate, including the following steps in this order: bonding the same or different types of films together via the active energy ray-curable adhesive composition of the present invention to form a laminated film; irradiating the laminated film with an active energy ray; and aging the laminated film irradiated with the active energy ray.

Further, the present invention relates to a production method of a laminate, including the following steps in this order: a step of applying the active energy ray-curable adhesive composition of the present invention onto a film; an irradiation step of irradiating the film with the adhesive composition applied thereon with an active energy ray; a lamination step of laminating and bonding the same or different types of films on a surface of the film irradiated with the active energy ray, the surface having the adhesive composition applied thereon, to form a laminated film; and an aging step of aging the laminated film.

Furthermore, the present invention relates to a laminate including at least a first resin layer mainly composed of a resin; a second resin layer mainly composed of polyolefin as a resin component; and a layer mainly composed of a resin that exists between the first resin layer and the second resin layer (the layer is referred to as a "first intermediate layer"), wherein the second resin layer has a melting point lower than that of the first resin layer, the first intermediate layer includes at least polyurethane and a compound having an aliphatic carbon-carbon double bond, and a ratio (A)/(B) of the maximum peak height (A) in a range from 1,600 to 1,650 cm⁻¹ to the maximum peak height (B) in a range from 1,700 to 1,750 cm⁻¹ is 0.05 or more and 0.40 or less in the transmission infrared spectroscopic measurement of the laminated film.

### Advantageous Effects of Invention

The active energy ray-curable adhesive composition according to the present invention has excellent curability, provides a cured film having flexibility, and can exhibit sufficient adhesion even to a film without having an easy adhesion layer. Description of Embodiments

Now, the present invention will be more specifically described below. In the present invention, "or more" means equal to or more than the value indicated. Further, "or less" means equal to or less than the value indicated. In addition, "(meth)acrylate" is a generic term including acrylate and methacrylate, and "(meth)acryloyl group" is a generic term including acryloyl group and methacryloyl group.

The active energy ray-curable adhesive composition of the present invention includes a conjugated diene polymer (A) which is liquid at 25°C and 1 atm (hereinafter also referred to simply as "conjugated diene polymer (A)"). The conjugated diene polymer (A) plays a role in imparting elasticity to the cured film after the adhesive composition is cured, which improves flexibility of the cured film after the active energy ray-curable adhesive composition is cured. A latex dispersion having elasticity is known as a material having a similar effect. Compared with a case where this dispersion is used, however, the conjugated diene polymer (A) used in the present invention is liquid at 25°C and 1 atm, resulting in less coloration and better transparency. Therefore, when used as a flexible packaging material, it shows less light scattering and good appearance. Further, it is highly compatible with the polyfunctional (meth)acrylate (B), the polyol compound (C), and the polyisocyanate compound (D), which are the other components of the adhesive composition of the present invention, and it is superior in terms of handling properties as well as optical properties of the cured film.

The conjugated diene polymer (A) preferably has a (meth)acryloyl group at the end or in the side chain, because the curability with an active energy ray is improved, crosslinking with the polyfunctional (meth)acrylate (B), which is another essential component, can be performed, and the flexibility of the cured film of the active energy ray-curable adhesive composition can be improved. Examples of methods of introducing a (meth)acryloyl group at the end or in the side chain include the methods described below.

The conjugated diene polymer (A) preferably has a glass transition temperature (Tg) of -80°C or more and -20°C or less, because flexibility is imparted to a cured film of the active energy ray-curable adhesive composition and adhesion to a film is improved.

The conjugated diene polymer (A) preferably has a weight average molecular weight of 10,000 or more, because flexibility is imparted to a cured film of the active energy ray-curable adhesive composition and adhesion to a film is improved. On the other hand, the conjugated diene polymer (A) preferably has a weight average molecular weight of 50,000 or less, because compatibility with other components is increased, which suppresses increase in viscosity as the active energy ray-curable adhesive composition, and handling properties are excellent.

It is preferable that 5 mass% or more of the conjugated diene polymer (A) is contained in the active ray-curable adhesive composition, taking a mass of the active energy ray-curable adhesive composition as 100 mass%, because flexibility is imparted to the cured film after the active ray-curable adhesive composition is cured, and adhesion to a film used for adhesion can also be improved. More preferably, 10 mass% or more of the conjugated diene polymer (A) is contained in the active energy ray-curable adhesive composition. It is preferable that 30 mass% or less of the conjugated diene polymer (A) is contained, because reduction in curability and increase in viscosity of the active energy ray-curable adhesive composition are suppressed. More preferably, 20 mass% or less of the conjugated diene polymer (A) is contained.

The conjugated diene polymer (A) used in the present invention is a polymer or copolymer of one or more types of conjugated dienes, and a copolymer of a conjugated diene and a monomer copolymerizable with the conjugated diene, and also includes derivatives obtained by further introducing functional groups to the ends or side chains of the above-mentioned polymers and copolymers, that is, a polymer having a conjugated double bond in the main chain skeleton. Specific examples include polymers of 1,3-butadiene, isoprene, 2,3-dimethylbutadiene, and piperylene, which may be either homopolymers or copolymers thereof, or copolymers of conjugated diene and vinyl monomers. Particularly preferred are polymers and copolymers using 1,3-butadiene or isoprene as the conjugated diene. As the vinyl monomer, styrene, alkyl styrene, acrylonitrile, (meth)acrylate ester, (meth)acrylic acid, maleic anhydride, or the like can be used. In particular, when the conjugated diene polymer (A) has a (meth)acryloyl group, it can be obtained by copolymerization with conjugated diene using glycidyl (meth)acrylate, (meth)acrylic acid, maleic anhydride, etc. as a vinyl monomer, followed by addition reaction with (meth)acrylic acid or glycidyl (meth)acrylate.

As such a conjugated diene polymer (A), the above-described synthetic products or commercially available products may be used. Examples of the commercially available product include "Kuraprene" (registered trademark) KL-10, LIR-30, LIR-50, LIR-290, LIR-310, LIR-390, LIR-403, LIR-410, UC-102M, UC-203M, LBR-300, LBR-302, LBR-305, LBR-307, LBR-352, LBR-361, L-SBR-820, and L-SBR-841 manufactured by Kuraray Co., Ltd.; "Poly bd" (registered trademark) R-15HT, R-45HT, "Poly ip" (registered trademark), and "EPOL" (registered trademark) manufactured by Idemitsu Kosan Co., Ltd.; "Nipol" (registered trademark) 1312, manufactured by Zeon Corporation; "NISSO PB" (registered trademark) B-1000, B-2000, B-3000, G-1000, G-2000, G-3000, BI-2000, BI-3000, JP-100, JP-200, TE-2000, TEAI-1000, and GQ-1000 manufactured by Nippon Soda Co., Ltd.; CN301, CN303, CN307, and CN9014 from SARTOMER; "KALENE" (registered trademark) 800, 1300, "ISOLENE" (registered trademark) 40-S, and 400-S manufactured by H. B. Fuller; and BAC-15, and BAC-45 manufactured by OSAKA ORGANIC CHEMICAL INDUSTRY LTD. Examples of the conjugated diene polymer having a (meth)acryloyl group include UC-102M, UC-203M, TE-2000, TEA-1000, TEAI-1000, BAC-15, and BAC-45.

The active energy ray-curable adhesive composition of the present invention contains polyfunctional (meth)acrylate (B). The polyfunctional (meth)acrylate (B) cures upon irradiation with an active energy ray and contributes to film formation. As the polyfunctional (meth)acrylate (B), those having high reactivity are preferred from the viewpoint of curability. It is also preferable to have low volatility from the viewpoint of safety and environment. The term "low volatility" refers to a weight loss rate of 1 wt% or less when heated at 110°C for 1 hour, as defined by Method 24 of the United States Environmental Protection Agency (EPA).

The polyfunctional (meth)acrylate (B) used in the present invention is a compound having more than one (meth)acryloyl groups in its molecule such as polyfunctional (meth)acrylate. Examples of difunctional (meth)acrylate include 1,6-hexanediol di(meth)acrylate, 1,9-nonanediol di(meth)acrylate, 1,10-decanediol di(meth)acrylate, bisphenol A di(meth)acrylate, diethylene glycol di(meth)acrylate, triethylene glycol di(meth)acrylate, polyethylene glycol di(meth)acrylate, tripropylene glycol di(meth)acrylate, polypropylene glycol di(meth)acrylate, 1,3-butylene glycol di(meth)acrylate, neopentyl glycol di(meth)acrylate, trimethylolpropane di(meth)acrylate, glycerin di(meth)acrylate, pentaerythritol di(meth)acrylate, diglycerin di(meth)acrylate, ditrimethylolpropane di(meth)acrylate, tricyclodecanedimethanol di(meth)acrylate.

Examples of trifunctional (meth)acrylate include trimethylolpropane tri(meth)acrylate, pentaerythritol tri(meth)acrylate, ditrimethylolpropane tri(meth)acrylate, glycerin tri(meth)acrylate, isocyanuric acid tri(meth)acrylate, and ditrimethylolpropane tri(meth)acrylate.

Examples of tetrafunctional (meth)acrylate include ditrimethylolpropane tetra(meth)acrylate, diglycerin tetra(meth)acrylate, and ditrimethylolpropane tetra(meth)acrylate.

Examples of pentafunctional or higher (meth)acrylate include dipentaerythritol penta(meth)acrylate, and dipentaerythritol hexa(meth)acrylate.

Note that the alcohol-derived components of these polyfunctional (meth)acrylate may be alkylene oxide adducts, for example, ethylene oxide or propylene oxide adducts, of polyols such as polyoxyethylene glycerin ether, which have hydroxyalkyleneoxy groups or hydroxypoly(alkyleneoxy) groups instead of hydroxyl groups.

Note that the polyfunctional (meth)acrylate (B) does not contain diene-derived conjugated double bond.

The polyfunctional (meth)acrylate (B) preferably has a tert-amino group because adhesion to the substrate film can be improved. It is presumably because the tert-amino group strongly interacts with polar groups such as hydroxyl groups, particularly carboxyl groups, on the surface of the film, thereby improving the adhesion of the cured film of the active energy ray-curable adhesive composition to the film. In addition, the tert-amino group contained in the (meth)acrylate (B) acts as a catalyst in the polyurethane formation reaction described below, thereby accelerating the reaction and shortening the aging time. Furthermore, compared to a case where a catalyst is simply allowed to coexist, the (meth)acrylate (B) is cured with an active energy ray to be covalently incorporated into the cured film, so that it is advantageously has lower migration.

Examples of such polyfunctional (meth)acrylate having a tert-amino group include EBECRYL LEO 10101, EBECRYL LEO 10551, EBECRYL LEO 10552, EBECRYL LEO 10553, EBECRYL 80, EBECRYL 81, EBECRYL 83, EBECRYL 85, EBECRYL 880, and EBECRYL 7100 manufactured by DAICEL-ALLNEX LTD.; ETERCURE 63922 manufactured by Eternal Materials Co., Ltd.; CN549NS, CN550, and CN551NS manufactured by SARTOMER; AgiSyn701, AgiSyn701P, AgiSyn703, and AgiSyn703TF manufactured by DSM; Miramer AS1000, Miramer AS3500, Miramer LR3600, Photocryl A104, and Photocryl DP143 manufactured by Miwon Specialty Chemical Co., Ltd. Alternatively, it can be synthesized by Michael addition reaction of the polyfunctional (meth)acrylate and secondary amines.

The polyfunctional (meth)acrylate (B) is preferably at least one selected from di(meth)acrylate having an alicyclic skeleton and di(meth)acrylate having 9 to 18 carbon atoms, because of excellent compatibility with the conjugated diene polymer (A) which is liquid at 25°C and 1 atm.

Examples of such polyfunctional (meth)acrylate include 1,9-nonanediol di(meth)acrylate, 1,10-decane diol di(meth)acrylate, and tricyclodecanedimethanol di(meth)acrylate. In particular, tricyclodecanedimethanol di(meth)acrylate is preferred.

Since the polyfunctional (meth)acrylate (B) improves curability with the active energy ray, 5 mass% or more and 50 mass% or less, of the polyfunctional (meth)acrylate (B) is contained, taking the mass of the active energy ray-curable adhesive composition as 100 mass%. More preferably, the content is 10 mass% or more and 40 mass% or less.

The active energy ray-curable adhesive composition of the present invention contains a polyol compound (C). The polyol compound (C) used in the present invention refers to a compound having two or more hydroxyl groups. Note that the polyol compound (C) does not contain conjugated double bond derived from diene.

Specific examples of the polyol compound (C) include neopentyl glycol, 1,3-butanediol, 1,4-butanediol, tripropylene glycol, tetramethylene glycol, glycerin, trimethylolpropane, pentaerythritol, ditrimethylolpropane, diglycerin, dipentaerythritol, ethylene oxide adducts, propylene oxide adducts, tetraethylene oxide adducts, and lactone adducts.

It is also preferable that the polyol compound (C) be a polyester polyol because heat resistance and coating film properties of the active energy ray-curable adhesive composition can be improved and resistance to boiling and retorting treatment can be imparted.

A polyester structure in polyester polyol is obtained by reacting dicarboxylic acid derivatives with diols. Specific examples of the dicarboxylic acid derivatives include phthalic acid, isophthalic acid, terephthalic acid, adipic acid, oxalic acid, maleic acid, fumaric acid, and sebacic acid. Polyester polyol having a polyester structure resulting from the reaction between such acid and diol, and a hydroxyl group at the end may be used.

Alternatively, a polyol compound having a carbonate structure can be used. Specific examples include pentamethylene carbonate diol, hexamethylene carbonate diol, hexane carbonate diol, and decane carbonate diol. These polyol compounds may be used singly or in a combination of two or more of them.

The molecular weight of the polyol compound (C) is preferably 500 or more, more preferably 1,000 or more, and still more preferably 2,000 or more, from the viewpoint of improving adhesion by increasing molecular weight. On the other hand, the molecular weight of the polyol compound (C) is preferably 10,000 or less, more preferably 7,000 or less, and still more preferably 5,000 or less, from the viewpoint of increasing fluidity of the adhesive composition to improve coatability.

The active energy ray-curable adhesive composition of the present invention contains a polyisocyanate compound (D). The polyisocyanate compound (D) used in the present invention refers to a compound that has two or more isocyanate groups and can be made to have increased molecular weight by addition reaction. Note that the polyisocyanate compound (D) does not contain conjugated double bond derived from diene. Since the active energy ray-curable adhesive composition of the present invention contains the polyol compound (C) and the polyisocyanate compound (D), after application to an adherend, they react to form polyurethane.

Specific examples of the polyisocyanate compound (D) include toluene diisocyanate, diphenylmethane diisocyanate, xylylene diisocyanate, naphthalene diisocyanate, cyclohexane diisocyanate, isophorone diisocyanate, 4,4-methylenebiscyclohexyl diisocyanate, hydrogenated xylylene diisocyanate, hexamethylene diisocyanate, lysine diisocyanate, and trimethylhexamethylene diisocyanate. Nurate modified products, adduct modified products, biuret modified products, allophanate modified products, etc. of these polyisocyanate compounds can also be used. The diisocyanate may be used singly or in a combination of two or more thereof.

The weight average molecular weight of the polyisocyanate compound (D) is preferably 500 or more, more preferably 1,000 or more, and still more preferably 2,000 or more from the viewpoint of preventing elution of the polyisocyanate compound (D) remaining in the cured adhesive composition. On the other hand, the weight average molecular weight of the polyisocyanate compound (D) is preferably 10,000 or less, more preferably 7,000 or less, and still more preferably 5,000 or less, from the viewpoint of enhancing fluidity of the adhesive composition to improve coatability.

Taking the mass of the active energy ray-curable adhesive composition as 100 mass%, the total content of the polyol compound (C) and the polyisocyanate compound (D) in the active energy ray-curable adhesive composition of the present invention is preferably 50 mass% or more, more preferably 60 mass% or more, from the viewpoint of improving the adhesion of the final laminated film, and is preferably 80 mass% or less, more preferably 70 mass% less, in order to reduce curability with an active energy ray and viscosity of the adhesive composition.

As for the molar ratio of the polyol compound (C) to the polyisocyanate compound (D), it is preferable that the content of the isocyanate group in the polyisocyanate compound be 0.8 mol or more and 1.2 mol or less, relative to 1.0 mol of hydroxyl group in the polyol compound (C). The closer the amount of isocyanate groups in the polyisocyanate compound is to 1.0 mol relative to the 1.0 mol of hydroxyl groups in the polyol compound (C), the more the chain elongation reaction proceeds and the higher the molecular weight of the resulting polyurethane, which improves adhesion.

The active energy ray-curable composition of the present invention preferably contains a photo initiator, depending on the active energy ray source. For example, α-aminoalkylphenones, thioxanthones, benzyl ketals, and acylphosphine oxides can be used as the photo initiators.

It is preferable that the active energy ray-curable adhesive composition of the present invention be substantially free of solvents and monofunctional (meth)acrylate. The solvent used herein is a compound other than the conjugated diene polymer (A), the polyfunctional (meth)acrylate (B), the polyol compound (C), and the polyisocyanate compound (D), which is liquid at 1 atm and 25°C and has a boiling point at 1 atm of 200°C or less. The term "substantially free of solvents and monofunctional (meth)acrylate" means that the total content of the solvents and the monofunctional (meth) acrylate in the active energy ray-curable adhesive composition is 0.1 mass% or less. The active energy ray-curable adhesive composition of the present invention is substantially free of solvents, which improves the curability of the adhesive composition with an active energy ray. In addition, it is possible to prevent the solvent from passing through the printed film and migrating to the contents. Specific examples of the solvent include alcohols such as ethanol, 1-propanol, 2-propanol, 1-butanol, and 2-butanol; esters such as ethyl acetate, propyl acetate, butyl acetate, amyl acetate, propyl propionate, and butyl propionate; glycols such as ethylene glycol, ethylene glycol monomethyl ether, ethylene glycol dimethyl ether, ethylene glycol monomethyl ether acetate, propylene glycol monomethyl ether, propylene glycol dimethyl ether, and propylene glycol monomethyl ether acetate; and ketones such as acetone and methyl ethyl ketone.

In addition, the active energy ray-curable composition of the present invention can use additives such as a wax, a surfactant, a defoaming agent, a leveling agent, etc. as other components.

The acrylic equivalent of the active energy ray-curable composition of the present invention is preferably 150 g/eq or more and 500 g/eq or less. When the acrylic equivalent is 150 g/eq or more, more preferably 200 g/eq or more, and still more preferably 250 g/eq or more, storage stability is improved. Furthermore, when the acrylic equivalent is 500 g/eq or less, more preferably 450 g/eq or less, and still more preferably 400 g/eq or less, the curability with an active energy ray becomes good. In the present invention, the acrylic equivalent represents the number of grams (unit: g/eq) of the active energy ray-curable composition required for the amount of the (meth)acryloyl groups contained in the active energy ray-curable composition to be 1 mole.

As for the viscosity of the active energy ray-curable composition of the present invention, it is preferable to have low viscosity to ensure a good appearance after coating, since the coating is done by a laminator. Since some equipment, such as a non-solvent laminator, can be heated by rolls, it is preferable that the viscosity be specifically 100 mPa·s or more and 10,000 mPa·s or less somewhere in the range of 25°C to 80°C.

Next, a method of producing the active energy ray-curable adhesive composition of the present invention will be described with examples. However, the present invention should not be construed as being limited to these examples.

The active energy ray-curable adhesive compositions of the present invention can be obtained by mixing the conjugated diene polymer (A), the polyfunctional (meth)acrylate (B), the polyol compound (C), the polyisocyanate compound (D), and if necessary, other components at room temperature to 80°C. As for a suitable range of the content of each component, the content of the conjugated diene polymer (A) is 10 to 20 mass%, the content of the polyfunctional (meth)acrylate (B) is 10 to 20 mass%, and the total content of the polyol compound (C) and the polyisocyanate compound (D) is 60 to 70 mass%, taking the mass of the active energy ray-curable adhesive composition as 100 mass%.

The foam is preferably removed under vacuum or reduced pressure after mixing or during the mixing process.

In a state where the polyol compound (C) and the polyisocyanate compound (D) are mixed, a polyurethane formation reaction may proceed, depending on the conditions such as environment. In such a case, the composition will begin to thicken. Therefore, it is practically preferable to prepare liquid A of the polyisocyanate compound (D) and liquid B which is a mixture of other components separately, mix the two liquids immediately before use, which is used as an adhesive composition using a laminator.

An aspect of the production method of a laminate of the present invention includes the following steps in this order: a lamination step of bonding the same or different types of films together via the active energy ray-curable adhesive composition of the present invention to form a laminated film; an irradiation step of irradiating the laminated film with an active energy ray; and an aging step of aging the film irradiated with the active energy ray.

In the lamination step described above, the film is coated with the active energy ray-curable adhesive composition of the present invention, and the other film is adhered to the coating film in a wet state to obtain a laminated film. The one film is preferably a printed material with an ink print applied thereon, while the other film is preferably a sealant.

Another aspect of a production method of a laminate of the present invention includes the following steps in this order: a step of applying an active energy ray-curable adhesive composition onto a film; an irradiation step of irradiating the film with the adhesive composition applied thereon with an active energy ray; a lamination step of laminating and bonding the same or different types of films as the film on a surface of the film irradiated with the active energy ray, the surface having the adhesive composition applied thereon, to form a laminated film; and an aging step of aging the laminated film.

The latter method is preferable because the irradiation of an active energy ray to the film on which the adhesive composition has been applied avoids irradiating the other film to be adhered with an active energy ray, thus avoiding damage to the film. It is also preferable because there is nothing to shield the active energy ray at the time of irradiation to the adhesive composition, so the attenuation of the active energy ray is minimized.

Examples of the film used for the laminate of the present invention include polyethylene, polypropylene, polyesters such as polyethylene terephthalate (PET), polybutylene terephthalate, and polylactic acid, polyamide, polyimide, polyalkyl (meth)acrylate, polystyrene, poly-α-methylstyrene, polycarbonate, polyvinyl alcohol, polyvinyl acetal, polyvinyl chloride, and polyvinylidene fluoride. Among them, polyolefins are known as materials that have a low environmental load and are suitable for use as packaging materials, while they have been criticized for being lacking in gas barrier properties and mechanical properties. However, as will be described later, polyolefins can be preferably utilized in the present invention because laminates that can compensate for these deficiencies can be obtained.

These films may further have a vapor-deposited thin film layer composed of a metal such as alumina or a metal compound, which may also be used.

It is preferable that the surface of the film be corona-treated. Because if so, the polar functional groups on the film surface increases and adhesion to the active energy ray-curable adhesive composition is improved. Furthermore, when the film is a printed material, it is preferable that the surface of the non-imaging area be subjected to a corona treatment.

The film having a corona-treated surface may be a ready-made product, or a product obtained by performing in-line corona-treatment on the film prior to printing or lamination.

It is acceptable for the film to have an easy adhesion coating layer, but it would be more costly. The active energy ray-curable adhesive composition of the present invention is preferable because it can exhibit sufficient adhesion even to a film without having an easy adhesion layer.

As for the form of the film, both a sheet-fed film and a rolled film can be used. When using a thin film for flexible packaging, it is preferable to use a rolled film and perform roll-to-roll coating and printing.

In the irradiation step, the (meth)acryloyl groups react by irradiation with an active energy ray, and are covalently crosslinked, resulting in instantaneous curing of the active energy ray-curable adhesive composition.

Examples of the active energy ray source used in the irradiation step include ultraviolet rays, electron beams, and gamma rays. In particular, electron beams are especially preferred because they require no initiator, require no special qualifications for use, and are easy to handle.

For ultraviolet light, ultraviolet irradiation devices such as high-pressure mercury vapor lamps, xenon lamps, metal halide lamps, and light-emitting diodes (LEDs) are preferably used. Among them, LED lamps are preferred which are energy-saving and generate less ozone. As for the wavelength of the LED, an emission line of 350 to 420 nm is preferable from the viewpoint of power saving and cost reduction.

For electron beams, the (meth)acryloyl group is directly radically excited, and radical polymerization proceeds in the active energy ray-curable adhesive composition to form a film. In addition, radiation is highly penetrating and may also affect the film. When the film is made of polyolefins, radicals are easily generated, causing reactions such as intermolecular crosslinking and decomposition, and as radical polymerization progresses between the active energy ray-curable adhesive composition and the film, covalent bonds are formed between the active energy ray-curable adhesive composition and the film, resulting in higher adhesion. In particular, electron beams with low acceleration voltages are preferred because they do not require special qualifications for use and are easy to handle. Since the depth of penetration of an electron beam is determined by the acceleration voltage, an acceleration voltage of 50 kV to 300 kV is preferred from the viewpoint of sufficient penetration and damage to the film. In addition, the electron beam irradiation dose is preferably 10 kGy or more and 100 kGy or less. Because while the amount of radical species generated in the target substance increases, the damage to the film also increases.

In the aging step described above, by performing heat treatment in an environment in the range of 40°C or more and 60°C or less, the reaction between the polyol compound (C) and the polyisocyanate compound (D) in the adhesive composition progresses, and the molecular weight increases, thereby further improving the adhesion.

A laminate which is an aspect of the present invention includes a first resin layer mainly composed of a resin. Note that in the description in the present specification, the term "mainly composed of" refers to the component most abundantly contained on a mass basis, unless otherwise specified. A typical aspect is, for example, an aspect where the component is more than 50 mass%, and preferably an aspect where the component is more than 70 mass%.

It is preferable that the resin constituting the first resin layer be mainly composed of polyolefin. Examples of polyolefin include linear low density polyethylene (LLDPE), low density polyethylene (LDPE), medium density polyethylene (MDPE), high density polyethylene (HDPE), polypropylene (PP) and their mixture, which may be unoriented, uniaxially oriented or multiaxially oriented. A laminate of two or more layers may be acceptable. The choice of raw olefin is mainly determined by the application as a packaging material, but generally, oriented polypropylene film, biaxially oriented polyethylene film, and uniaxially oriented polyethylene film are preferably used because they are rigid and do not stretch easily during transportation at the time of printing and lamination. In transmission infrared spectroscopy, polyethylene exhibits C-H bending vibrations at 700 to 750 cm⁻¹, C-H bending vibrations at 1,400 to 1,500 cm⁻¹, and C-H stretching vibrations at 2,800 to 3,000 cm⁻¹. Polypropylene exhibits C-H bending vibrations at 700 to 750 cm⁻¹, a combined vibration of C-H stretching vibrations and C-H bending vibrations at 950 to 1,000 cm⁻¹, C-H bending vibrations at 1,150 to 1,200 cm⁻¹, C-CH₃ bending vibrations at 1,350 to 1400 cm⁻¹, C-H bending vibrations at 1,400 to 1,500 cm⁻¹, and C-H stretching vibrations at 2,800 to 3,000 cm⁻¹. Also, neither polyethylene nor polypropylene has a major absorption peak in the regions of 1,500 to 2,500 cm⁻¹ and 3,100 to 4,000 cm⁻¹.

The olefin suitably used for the first resin layer may contain recycled raw materials or biomass-derived (plant-derived) raw materials. It may be a mixture with raw materials derived from chemical fuels, and preferably contains 10 to 95 mass% of biomass-derived raw materials relative to the total materials.

When the first resin layer is mainly composed of polyolefin, the density of the first resin layer is preferably 0.93 g/cm³ or more from the viewpoints of post-processability and heat resistance.

The first resin layer is preferably subjected to a surface treatment such as a corona treatment, a burning treatment, a plasma treatment, etc., in order to improve wettability and adhesion to a printing ink and a first intermediate layer described below.

The first resin layer preferably has an inorganic layer or a water-soluble resin layer, since it can improve the gas barrier property and enhance the preservability of the contents when used as a packaging material. The first resin layer may further have an anchor layer to improve adhesion between these layers and said resin layer. When the first resin layer is mainly composed of polyolefin, the effect is remarkable.

The inorganic layer refers to a layer containing an inorganic compound. Examples of the inorganic compound include aluminum, magnesium, titanium, tin, indium, silicon, zinc, and oxides thereof. Among them, aluminum oxide is preferred from the viewpoints of heat resistance and acid resistance to the contents. The inorganic layer can be formed by a deposition method, a sputtering method, a plasma vapor growth method, or the like.

The water-soluble resin layer refers to a cured layer containing a water-soluble resin. Examples of the water-soluble resin includes polyvinyl alcohol, ethylene-vinyl alcohol copolymer, etc., and mainly enhance the oxygen barrier property. The water-soluble resin layer may also contain other condensation products obtained by sol-gel reaction of silicon alkoxide, aluminum alkoxide, titanium alkoxide, and the like. The inclusion of the condensate mainly improves the water vapor barrier property.

The first resin layer, including a case where the first resin layer is mainly composed of polyolefin, is preferably 10 µm or more in order to have mechanical properties suitable for printing, and is preferably 100 µm or less in terms of cost.

As the first resin layer, including a case where the first resin layer is mainly composed of polyolefin, either a sheet-fed film or a rolled film may be used. For flexible packaging applications, it is preferable to use a rolled film and subject the film to a roll-to-roll processing from the viewpoint of productivity.

The laminate of the present invention includes a second resin layer mainly composed of polyolefin. The second resin layer has a lower melting point than that of the first resin layer.

Since the second resin layer (hereinafter also referred to as "second polyolefin layer" for convenience) has a lower melting point than the first resin layer, the second polyolefin layers can be placed face to face and then bonded by heat sealing (hereinafter referred to as "heat sealability"). It can then be formed into a desired shape, such as a bag-like shape. Thus, the laminate of the present invention can be used as a packaging material. Furthermore, by adopting such a configuration, it is easy to apply a print to the surface of the first resin layer facing the second polyolefin layer, and it is possible to impart a design and to suppress deterioration over time by protecting the printed surface.

Examples of polyolefins that can be used in the second polyolefin layer include linear low density polyethylene (LLDPE), low density polyethylene (LDPE), medium density polyethylene (MDPE), polypropylene (PP) and their mixture, which may be unoriented, uniaxially oriented or multiaxially oriented. A laminate of two or more layers may be acceptable. The choice of raw olefin is determined mainly by the application as a packaging material, but unoriented polypropylene film and unoriented polyethylene film are preferably used because flexibility is generally required as a sealant. In particular, from the viewpoint of recyclability, it is preferable that the first resin layer be mainly composed of polyolefin and be a resin obtained from the same olefin species as this polyolefin.

The polyolefin used in the second polyolefin layer may contain recycled materials or may contain biomass-derived (plant-derived) materials. It may be a mixture with raw materials derived from chemical fuels, and preferably contains 10 to 95 mass% of biomass-derived raw materials relative to the total materials.

The polyolefin used in the second polyolefin layer is preferably subjected to a surface treatment such as a corona treatment, a burning treatment, a plasma treatment in order to improve wettability to the adhesive.

The polyolefin used in the second polyolefin layer improves the gas barrier property and enhances the preservability of the contents when used as a packaging material, and therefore may have an inorganic layer or a water-soluble resin layer.

For the second polyolefin layer, 30 µm or more is preferred from the viewpoint of providing elongation to the laminate, and 200 µm or less is preferred from the viewpoint of cost.

As polyolefin used in the second polyolefin layer, both a sheet-fed film and a rolled film can be used. For flexible packaging applications, it is preferable to use a rolled film and subject the film to a roll-to-roll processing from the viewpoint of productivity.

The laminate of the present invention includes a layer mainly composed of a resin (first intermediate layer) that exists between the first resin layer and the second polyolefin layer. The first intermediate layer contains a polyurethane resin and a compound having an aliphatic carbon-carbon double bond. The meaning of "first" in the first intermediate layer is to distinguish it from an intermediate layer that does not contain a polyurethane resin or a compound having an aliphatic carbon-carbon double bond, without precluding provision of multiple layers as the first intermediate layer, for example, including polyurethane resin species, compound species having an aliphatic carbon-carbon double bond, different content ratios of the polyurethane resin species and the compound species having an aliphatic carbon-carbon double bond.

The polyurethane resin is an addition polymerization product of a polyol compound having two or more hydroxyl groups and a polyisocyanate compound having two or more isocyanate groups. In transmission infrared spectroscopy, the polyurethane exhibits absorption peaks derived from the structural units of polyisocyanate having two or more isocyanate groups and polyol having two or more hydroxyl groups, but both the peak at 2,200 to 2,300 cm⁻¹ derived from isocyanate and the broad peak at 3,200 to 4,000 cm⁻¹ derived from hydroxyl group disappear at levels observable by transmission infrared spectroscopy, while the peaks of C=O stretching vibrations at 1,700 to 1,750 cm⁻¹ and N-H stretching vibrations at 3,100 to 3,300 cm⁻¹ derived from the urethane bond can be observed.

The first intermediate layer contains a compound having an aliphatic carbon-carbon double bond. The compound having an aliphatic carbon-carbon double bond exhibits a peak at 1,600 to 1,650 cm⁻¹ derived from C=C stretching vibrations of the carbon-carbon double bond in transmission infrared spectroscopy.

The laminate of the present invention has a ratio ((A)/(B)) of the maximum peak height (A) in the range from 1,600 to 1,650 cm⁻¹ to the maximum peak height (B) in the range from 1,700 to 1,750 cm⁻¹ of 0.05 or more and 0.40 or less in transmission infrared spectroscopy. The specific measurement method is as explained in Examples section. Although the laminate of the present invention may be subjected to processing such as printing on its surface, but it is natural that the area that has been subjected to such processing will not be selected as the measurement point. When the first resin layer or the second resin layer has absorption in the range of 1,600 to 1,650 cm⁻¹ or in the range of 1,700 to 1,750 cm⁻¹, the first resin layer or the second resin layer having absorption in that range may be peeled off, or a resin film having the same composition as that of the first intermediate layer may be separately synthesized, and then the ratio (A)/(B) may be measured.

The above-described compound having an aliphatic carbon-carbon double bonds is preferably a conjugated diene polymer because of its high ability to make the first intermediate layer flexible.

The conjugated diene polymer using acrylonitrile as a copolymerization component is preferable, because chemical resistance and other properties can be improved. Here, the nitrile group is known to exhibit a characteristic peak at 2,100 to 2,300 cm⁻¹ in transmission infrared spectroscopy. It is preferable that the laminate of the present invention have a ratio ((C)/(B)) of the maximum peak height (C) in the range from 2,100 to 2,300 cm⁻¹ to the maximum peak height (B) in the range from 1,700 to 1,750 cm⁻¹ of 0.05 or more and 0.40 or less in the transparent portion in transmission infrared spectroscopy.

The first intermediate layer may contain poly(meth)acrylate, which is a polymer of polyfunctional (meth)acrylate, when it is cured by irradiation with an active energy ray (chemical changes such as crosslinking and condensation reactions induced by an active energy ray).

In transmission infrared spectroscopy, (meth)acrylate is known to exhibit a peak of C=C stretching vibrations at 1,600 to 1,650 cm⁻¹ and a peak of C=O stretching vibrations at 1,700 to 1,750 cm⁻¹, although the former peak is hardly observable at the stage where a laminate is obtained by the chemical reactions induced by an active energy ray.

From the viewpoint of design, the laminate of the present invention, including a case where the first resin layer is mainly composed of polyolefin, is preferably has an ink print on at least one surface of the first resin layer. The ink print refers to a state where an ink is applied and then fixed to the first resin layer by drying or curing.

A typical aspect of the ink is an ink including a pigment or dye mixed with a binder. Any of a thermal drying type ink such as a solvent or water-based ink, an oxidative polymerization type oil-based ink, and an active energy ray-curable ink that cures upon irradiation with an active energy ray can be used, and among them, active energy ray-curable inks that require less energy for drying and have a low environmental load are preferred.

In an aspect of the laminate of the present invention, when an ink print is applied to the side of the first resin layer opposite to the side on which the second polyolefin layer is present, and is in an exposed state to ambient, a so-called surface printing configuration is obtained. In particular, when an active energy ray-curable ink is used as an ink, it is suitable for surface printing due to its high coating strength and excellent abrasion resistance.

Furthermore, including cases where the first resin layer is mainly composed of polyolefin, a varnish film can be provided on top of the print because it can protect the print on the side of the first resin layer opposite to the side on which the second polyolefin layer is present and impart design features such as gloss and matte appearance. As the varnish film, either a thermal drying type varnish such as a solvent or water-based varnish, or an active energy ray-curable varnish that cures upon irradiation with an active energy ray can be used, and among them, active energy ray-curable varnishes that require less energy for drying and have a low environmental load are preferred. Specific examples include water-based varnishes containing self-emulsifying or surfactant-emulsifying acrylic resins, acrylic epoxy resins, and acrylic amino resins, and active energy ray-curable varnishes containing (meth)acrylate oligomers such as urethane (meth)acrylate, ester (meth)acrylate, and epoxy (meth)acrylate.

The laminate production method of the present invention is as described above. In order to impart design to the laminate by printing on the first resin layer, however, for a reverse printing configuration, the first resin layer is printed before the lamination step.

For a surface printing configuration, printing and varnishing may be performed on a laminate already having a first intermediate layer, or the lamination step may be performed after printing and varnishing on the first resin layer. From the viewpoint of productivity, the former is preferable.

The packaging material of the present invention can be obtained using the above-described laminate and is formed by bonding in the second polyolefin layer, utilizing the characteristic that the second polyolefin layer has heat sealability.

As an example of a method of producing the packaging material, a bag-shaped packaging material can be obtained by folding the laminate into halves with the first resin layer facing outside and the second polyolefin layer facing inside (content side), and then heat-sealing the ends of the overlapped layers. In another aspect, it can be obtained by overlapping two laminates with the second polyolefin layers facing each other, and heat sealing their ends. Such an example of obtaining a bag-shaped packaging material can also be preferably adopted in a case where the first resin layer is mainly composed of polyolefin.

In addition, packaging materials of various shapes can be produced by making full use of side seals, two-sided seals, three-sided seals, four-sided seals, pillow seals, pleated seals, flat bottom seals, square bottom seals, gusset seals, etc. depending on the aspect of heat sealing. For example, self-standing packaging materials (standing pouches) are also possible. For example, as the above-described method of heat sealing, known methods such as bar sealing, impulse sealing, belt sealing, rotating roller sealing, high-frequency sealing, and ultrasonic sealing can be used.

### Examples

Hereinafter, the present invention will be described more specifically with reference to Examples. However, the present invention should not be construed as being limited to these examples.

### [Measurement and evaluation methods]

### (1) Electron beam curability

A PET film (E5102 manufactured by TOYOBO Co., Ltd.) having a thickness of 12 µm was coated with the active energy ray-curable adhesive composition to attain 2.0 g/m², and then the composition-coated surface was irradiated using an electron beam irradiation device (EC250/30/90LS, manufactured by IWASAKI ELECTRIC CO., LTD.) at an acceleration voltage of 110 kV and varying irradiation doses. The minimum dose at which the composition lost tackiness and cured was recorded. A smaller minimum dose indicates better curability. A dose of 45kGy or less is practical and good, and a dose of 25kGy or less is particularly good. When the composition did not cure even after irradiation at a dose of 240 kGy, it was recorded as "uncured."

### (2) Viscosity

A B-type viscometer (DV-II, manufactured by Brookfield Engineering) equipped with a cylinder spindle No. 4 was used to measure viscosity of each of the active energy ray-curable compositions at 60°C and 0.5 rpm. From the viewpoint of coatability and printability, the viscosity is preferably 5,000 mPa·s or less, and more preferably 1,000 mPa·s or less.

### (3) Appearance of coating film

The appearance of the cured film (corresponding to the intermediate layer) of the active energy ray-curable adhesive composition of the laminate was visually evaluated according to the following evaluation criteria.
A: Good appearance with no diffuse reflection due to bubbles or unevenness.
B: Very slight diffuse reflection due to bubbles or unevenness was observed.
C: Diffuse reflection due to bubbles or unevenness was observed throughout.

### (4) Flexibility of coating film

The laminate was folded into halves immediately (within 5 minutes) after irradiation with an active energy ray, and the appearance of the cured film (corresponding to the intermediate layer) of the active energy ray-curable adhesive composition was evaluated. The evaluation criteria are as follows:
A: The film exhibited good appearance with no cracks even after bending many times.
B: Slight crack was observed in the film when it was bent several times.
C: The entire surface of the film cracked after bending only once.

### (5) Peel strength

The laminate was cut into strips of 15 mm width, and the peel strength was measured on a surface coated with the adhesive composition when peeled at 90° at 300 mm/min using a Tensilon universal testing device (RTG-1210, manufactured by ORIENTEC CO., LTD.).

The peel strength of the sample measured within 30 minutes after curing with an active energy ray was evaluated as "initial adhesion". The peel strength of the sample after aging at 40°C for 72 hours (after aging) was evaluated as "adhesion after aging".

Regarding initial adhesion, when the peel strength was less than 0.5 N/15 mm, the adhesion was determined to be insufficient; when the peel strength was 0.5 N/15 mm or more and less than 1.0 N/15 mm, the adhesion was determined to be good; when the peel strength was 1.0 N/15 mm or more and less than 2.0 N/15 mm, the adhesion was determined to be better, and when the peel strength was 2.0 N/15 mm or more, the adhesion was determined to be extremely good.

Regarding adhesion after aging, when the peel strength was less than 3.0 N/15 mm, the adhesion was determined to be insufficient; when the peel strength was 3.0 N/15 mm or more and less than 4.0 N/15 mm, the adhesion was determined to be good; and when the peel strength was 4.0 N/15 mm or more, the adhesion was determined to be extremely good.

### (6) Failure mode

In the peeling test after aging in (5) above, the state (failure mode) at the time of peeling was also observed. In a sample having a multi-layer structure in which three or more substrate layers are used, an area between the substrates where failure occurs at the time of peeling corresponds to an area with the weakest adhesion. The samples were evaluated by A to C below.
A: The film underwent cohesive failure or rupture.
B: The active energy ray-curable adhesive composition layer underwent cohesive failure.
C: Peeling occurred between the film/active energy ray-curable adhesive composition layer and the film layer.
Here, the term "active energy ray-curable adhesive composition layer" refers to a layer which is obtained by curing the active energy ray-curable adhesive composition. Among those listed above, A is most preferred, B is next preferred, and C is not preferred.

### (7) Measurement by transmission infrared spectroscopy

The laminate as a sample was sandwiched between sodium chloride plates, and a transmission infrared absorption measurement was performed on the portion that was not subjected to processing that would interfere with the measurement, such as printing, by a transmission method using an IR Tracer-100 manufactured by SHIMADZU CORPORATION, in the range from 600 to 4000 cm⁻¹, with Happ-Genzel function as an apodization function, a resolution of 4 cm⁻¹, and a cumulative number of 32, and the absorbance at each wave number was calculated. When the peaks were observed in the ranges of 1,600 to 1,650 cm⁻¹, 1,700 to 1,750 cm⁻¹, and 2,100 to 2,300 cm⁻¹, baseline correction was performed at three points in the wavenumber band where no absorption peak was observed, and then the maximum peak height was determined. In addition, the ratio ((A)/(B)) of the maximum peak height (A) in the range of 1,600 to 1,650 cm⁻¹ to the maximum peak height (B) in the range of 1,700 to 1,750 cm⁻¹ and the ratio ((C)/(B)) of the maximum peak height (C) in the range of 2,100 to 2,300 cm⁻¹ to the maximum peak height (B) in the range of 1,700 to 1,750 cm⁻¹ were calculated. In cases where it was difficult to measure the ratio (A)/(B) and ratio (C)/(B) directly from the laminate because the substrate film corresponding to the first resin layer had absorption in the range of 1,600 to 1,650 cm⁻¹ or in the range of 1,700 to 1,750 cm⁻¹, a resin film having the same composition as that of the first intermediate layer was separately synthesized, and the ratio (A)/(B) and then the ratio (C)/(B) were measured.

### [Conjugated diene polymer (A) which is liquid at 25°C and 1 atm]

(A)-1: Polybutadiene ("NISSO-PB" (registered trademark) B-2000 manufactured by Nippon Soda Co., Ltd.), without (meth)acryloyl group, without nitrile group, Tg = - 29°C, weight average molecular weight 3,500.
(A)-2: Polyisoprene ("Kuraprene" (registered trademark) LIR-30 manufactured by Kuraray Co., Ltd.), without (meth)acryloyl group, without nitrile group, Tg = -63°C, weight average molecular weight 28,000.
(A)-3: Polybutadiene ("NISSO-PB" (registered trademark) G-3000 manufactured by Nippon Soda Co., Ltd.), without (meth)acryloyl group, without nitrile group, Tg = - 15°C, weight average molecular weight 4,100.
(A)-4: Polyisoprene copolymer having acrylic-modified side chain ("Kuraprene" (registered trademark) UC-203M manufactured by Kuraray Co., Ltd.), with (meth)acryloyl group, without nitrile group, Tg = -60°C, weight average molecular weight 35,000.
(A)-5: Polybutadiene copolymer having acrylic-modified end ("NISSO-PB" (registered trademark) TE-2000 manufactured by Nippon Soda Co., Ltd.), with (meth)acryloyl group, without nitrile group, Tg = -9°C, weight average molecular weight 3,600.
(A)-6: Polybutadiene copolymer having acrylic-modified end (BAC-45 manufactured by OSAKA ORGANIC CHEMICAL INDUSTRY LTD.), with (meth)acryloyl group, without nitrile group, Tg = -22°C, weight average molecular weight 10,000.
(A)-7: Nitrile butadiene copolymer ("Nipol" (registered trademark) 1312 manufactured by Zeon Corporation), no (meth)acryloyl group, with nitrile group, Tg = -36°C, weight average molecular weight 10,000.

### [Polyfunctional (meth)acrylate (B)]

(B)-1: EO(ethylene oxide)-modified trimethylolpropane triacrylate ("Miramer" (registered trademark) M3130 manufactured by Miwon Specialty Chemical Co Ltd)
(B)-2: Decanediol diacrylate ("NK ester" (registered trademark) A-DOD-N manufactured by SHIN-NAKAMURA CHEMICAL Co., Ltd.)
(B)-3: Tricyclodecanedimethanol diacrylate ("EBECRYL" (registered trademark) 130 manufactured by DAICEL-ALLNEX LTD.)
(B)-4: Michael addition reaction product between dipentaerythritol hexaacrylate ("Miramer" (registered trademark) M600 manufactured by Miwon Specialty Chemical Co Ltd) and 1H-benzotriazole (manufactured by WAKENYAKU CO., LTD.) at a molar ratio of 3:1.
(B)-5: Amine-modified acrylate ("EBECRYL" (registered trademark) LEO 10552 manufactured by DAICEL-ALLNEX LTD.)

### [Polyol compound (C)]

(C): "TAKELAC" (registered trademark) A-244B manufactured by Mitsui Chemicals, Inc.

### [Polyisocyanate compound (D)]

(D): "TAKENATE" (registered trademark) A-244A manufactured by Mitsui Chemicals, Inc.

### [Conjugated diene polymer which is solid at 25°C and 1 atm ((A') in Tables)]

Conjugated diene polymer: Acrylonitrile butadiene rubber which is solid at 25°C and 1 atm ("Nipol" (registered trademark) DN219 manufactured by Zeon Corporation

### [Photo initiator]

Photo initiator: Bis(2,4,6-trimethylbenzoyl)-phenyl-phosphine oxide ("Irgacure" (registered trademark) 819 manufactured by BASF)

### [Active energy ray-curable adhesive composition]

Each material was weighed according to the compositions shown in Table 1, and the active energy ray-curable adhesive compositions 1 to 25 were obtained by mixing and dissolving using a hybrid mixer (manufactured by THINKY CORPORATION).

**[Table 1-1]**

| Table 1 | | | | | | | | | | | | |
|---|---|---|---|---|---|---|---|---|---|---|---|---|
| | | | Active energy ray-curable adhesive composition | | | | | | | | | |
| | | | 1 | 2 | 3 | 4 | 5 | 6 | 7 | 8 | 9 | 10 |
| Composition (parts by mass) | Conjugated diene polymer (A) | (A)-1 | 15 | 0 | 0 | 0 | 0 | 0 | 0 | 0 | 0 | 0 |
| | | (A)-2 | 0 | 15 | 0 | 0 | 0 | 0 | 0 | 0 | 0 | 0 |
| | | (A)-3 | 0 | 0 | 15 | 0 | 0 | 0 | 0 | 0 | 0 | 0 |
| | | (A)-4 | 0 | 0 | 0 | 15 | 0 | 0 | 3 | 8 | 25 | 34 |
| | | (A)-5 | 0 | 0 | 0 | 0 | 15 | 0 | 0 | 0 | 0 | 0 |
| | | (A)-6 | 0 | 0 | 0 | 0 | 0 | 15 | 0 | 0 | 0 | 0 |
| | Polyfunctional (meth)acrylate (B) | (B)-1 | 0 | 0 | 0 | 0 | 0 | 0 | 0 | 0 | 0 | 0 |
| | | (B)-2 | 0 | 0 | 0 | 0 | 0 | 0 | 0 | 0 | 0 | 0 |
| | | (B)-3 | 19 | 19 | 19 | 19 | 19 | 19 | 16 | 17 | 15 | 6 |
| | | (B)-4 | 0 | 0 | 0 | 0 | 0 | 0 | 0 | 0 | 0 | 0 |
| | | (B)-5 | 0 | 0 | 0 | 0 | 0 | 0 | 0 | 0 | 0 | 0 |
| | Polyol (C) | (C) | 22 | 22 | 22 | 22 | 22 | 22 | 27 | 25 | 20 | 20 |
| | Polyisocyanate (D) | (D) | 44 | 44 | 44 | 44 | 44 | 44 | 54 | 50 | 40 | 40 |
| | Other components | (A') | 0 | 0 | 0 | 0 | 0 | 0 | 0 | 0 | 0 | 0 |
| | | Photo initiator | 0 | 0 | 0 | 0 | 0 | 0 | 0 | 0 | 0 | 0 |
| Physical properties | | Electron beam curability (kGy) | 40 | 40 | 40 | 30 | 25 | 20 | 40 | 30 | 40 | 40 |
| | | Viscosity (mPa·s) 60°C, 0.5 rpm | 1000 | 1600 | 3000 | 4200 | 7100 | 950 | 650 | 800 | 8900 | 28000 |

**[Table 1-2]**

| Table 1 (continued) | | | | | | | | | | | | |
|---|---|---|---|---|---|---|---|---|---|---|---|---|
| | | | Active energy ray-curable adhesive composition | | | | | | | | | |
| | | | 11 | 12 | 13 | 14 | 15 | 16 | 17 | 18 | 19 | 20 |
| Composition (parts by mass) | Conjugated diene polymer (A) | (A)-1 | 0 | 0 | 0 | 0 | 0 | 0 | 0 | 0 | 0 | 0 |
| | | (A)-2 | 0 | 0 | 0 | 0 | 0 | 0 | 0 | 0 | 0 | 0 |
| | | (A)-3 | 0 | 0 | 0 | 0 | 0 | 0 | 0 | 0 | 0 | 0 |
| | | (A)-4 | 15 | 15 | 15 | 15 | 25 | 15 | 0 | 34 | 0 | 40 |
| | | (A)-5 | 0 | 0 | 0 | 0 | 0 | 0 | 0 | 0 | 0 | 0 |
| | | (A)-6 | 0 | 0 | 0 | 0 | 0 | 0 | 0 | 0 | 0 | 0 |
| | Polyfunctional (meth)acrylate (B) | (B)-1 | 19 | 0 | 0 | 0 | 0 | 0 | 0 | 0 | 34 | 0 |
| | | (B)-2 | 0 | 19 | 0 | 0 | 0 | 0 | 0 | 0 | 0 | 0 |
| | | (B)-3 | 0 | 0 | 0 | 0 | 30 | 14 | 19 | 0 | 0 | 60 |
| | | (B)-4 | 0 | 0 | 19 | 0 | 0 | 0 | 0 | 0 | 0 | 0 |
| | | (B)-5 | 0 | 0 | 0 | 19 | 0 | 0 | 0 | 0 | 0 | 0 |
| | Polyol (C) | (C) | 22 | 22 | 22 | 22 | 15 | 22 | 22 | 22 | 22 | 0 |
| | Polyisocyanate (D) | (D) | 44 | 44 | 44 | 44 | 30 | 44 | 44 | 44 | 44 | 0 |
| | Other components | (A') | 0 | 0 | 0 | 0 | 0 | 0 | 15 | 0 | 0 | 0 |
| | | Photo initiator | 0 | 0 | 0 | 0 | 0 | 5 | 0 | 0 | 0 | 0 |
| Physical properties | | Electron beam curability (kGy) | 25 | 30 | 20 | 40 | 10 | 10 | 60 | Uncured | 10 | 10 |
| | | Viscosity (mPa·s) 60°C, 0.5 rpm | 3800 | 1400 | 9600 | 6000 | 2600 | 4500 | 800 | 25000 | 150 | 11000 |

**[Table 1-3]**

| Table 1 (continued) | | | | | | | |
|---|---|---|---|---|---|---|---|
| | | | Active energy ray-curable adhesive composition | | | | |
| | | | 21 | 22 | 23 | 24 | 25 |
| Composition (parts by mass) | Conjugated diene polymer (A) | (A)-1 | 24 | 0 | 0 | 0 | 0 |
| | | (A)-4 | 0 | 0 | 20 | 0 | 0 |
| | | (A)-7 | 0 | 20 | 0 | 0 | 0 |
| | Polyfunctional (meth)acrylate (B) | (B)-1 | 0 | 4 | 0 | 30 | 45 |
| | | (B)-3 | 10 | 10 | 14 | 10 | 10 |
| | Polyol (C) | (C) | 22 | 22 | 22 | 20 | 15 |
| | Polyisocyanate (D) | (D) | 44 | 44 | 44 | 40 | 30 |
| Physical properties | | Electron beam curability (kGy) | 45 | 40 | 35 | 10 | 10 |
| | | Viscosity (mPa·s) 60°C, 0.5 rpm | 1600 | 1300 | 4900 | 300 | 100 |

### [Substrate film]

Substrate film 1: PET film having thickness of 12 µm (E5102 manufactured by TOYOBO Co., Ltd.)
Substrate film 2: Polyamide film having thickness of 15 µm ON manufactured by UNITIKA LTD.)
Substrate film 3: Barrier film/PET film laminate having thickness of 12 µm (1011HG SBR2 manufactured by TORAY ADVANCED FILM Co., Ltd.)
Substrate film 4: Oriented polypropylene (OPP) film having thickness of 20 µm (FOR manufactured by FUTAMURA CHEMICAL CO., LTD.)
Substrate film 5: Uniaxially oriented polyethylene (MOPE) film having thickness of 25 µm (PE3K-H manufactured by FUTAMURA CHEMICAL CO., LTD.)
Substrate film 6: OPP film with barrier layer having thickness of 16 µm (AO893 manufactured by Jindal)
Substrate film 7: Biaxially oriented polyethylene (BOPE) film having thickness of 20 µm (HD200 manufactured by Jindal)

### [Heat sealable film]

Heat sealable film 1: Unoriented polypropylene (CPP) film having thickness of 40 µm (P1128 manufactured by TOYOBO Co., Ltd.)
Heat sealable film 2: LLDPE film having thickness of 50 µm (LL-XHT manufactured by FUTAMURA CHEMICAL CO., LTD.)
Heat sealable film 3: CPP film having thickness of 50 µm (ZK207 manufactured by TORAY ADVANCED FILM Co., Ltd.)
Heat sealable film 4: CPP film having thickness of 60 µm (ZK207 manufactured by TORAY ADVANCED FILM Co., Ltd.)

### [Laminate production method 1]

As shown in Table 2, 3, or 4, the film was coated with an active energy ray-curable adhesive composition to 2.0 g/m² and then a heat sealable film was laminated thereon. Then, the adhesive composition was cured by irradiation with an electron beam at an acceleration voltage of 110kV and an irradiation dose of 45kGy from the substrate film side using an electron beam irradiation device (EC250/30/90LS manufactured by Iwasaki Electric Co., Ltd.). Thereafter, aging was performed at 40°C for 72 hours.

### [Laminate production method 2]

As shown in Table 2, 3, or 4, the film was coated with an active energy ray-curable adhesive composition to 2.0 g/m² and then a heat sealable film was laminated thereon. Then, the adhesive composition was cured by LED-UV irradiation from the substrate film side at an irradiation intensity of 8 W/cm² and an irradiation wavelength of 385 nm using a light-emitting diode UV irradiation device (UD90 manufactured by Panasonic Industrial Devices SUNX Co., Ltd.). Thereafter, aging was performed at 40°C for 72 hours.

### [Laminate production method 3]

As shown in Table 2, 3, or 4, the film was coated with an active energy ray-curable adhesive composition to 2.0g/m². Then, the adhesive composition was cured by electron beam irradiation at an acceleration voltage of 110kV and an irradiation dose of 45kGy from the adhesive composition side using an electron beam irradiation device (EC250/30/90LS manufactured by Iwasaki Electric Co., Ltd.). Then, heat sealable film was laminated. Thereafter, aging was performed at 40°C for 72 hours.

### [Example 1]

The laminate was made according to the laminate production method 1 using an active energy ray-curable adhesive composition 1 as the active energy ray-curable adhesive composition and a substrate film 1 as the film. As for peel strength, initial adhesion was as good as 0.7 N/15 mm, and adhesion after aging was as extremely good as 4.4 N/15 mm. The failure mode was also good (A), and appearance and flexibility of the coating film were also good. The results are shown in Table 2.

### [Examples 2 to 15]

The laminates were made according to the laminate production method 1 using active energy ray-curable adhesive compositions 2 to 15 as the active energy ray-curable adhesive compositions and a substrate film 1 as the film. In Examples 2 to 15, the peel strength was good both initially and after aging. In Examples 2 to 6, since the conjugated diene polymer (A) which is liquid at 25°C and 1 atm has a (meth)acryloyl group, it tends to integrate with a cured acrylate film and improve initial adhesion. In Examples 7 to 10, the increase in the amount of the conjugated diene polymer (A) which was liquid at 25°C and 1 atm tended to improve flexibility of the coating film and initial adhesion, but also increased viscosity of the active energy ray-curable adhesive composition and decreased the amount of other components: the polyfunctional (meth)acrylate (B), the polyol compound (C), and the polyisocyanate compound (D). Therefore, above a certain amount, the curability and adhesion after aging tended to decrease. Examples 11 to 14 showed a tendency for flexibility of coating film and initial adhesion to decrease when the polyfunctional (meth)acrylate (B) had poor compatibility. The use of the polyfunctional (meth)acrylate (B) containing tert-amino groups tended to improve the initial adhesion. In Example 15, when the amounts of the polyol compound (C) and the polyisocyanate compound (D) fell below a certain level, a decrease in adhesion after aging was observed. The results are shown in Tables 2 and 3.

### [Examples 16 to 18]

The laminate was made according to the laminate production method 1 using an active energy ray-curable adhesive composition 6 as the active energy ray-curable adhesive composition and a substrate film 2 to 4 as the film respectively. Both appearance and flexibility of the coating film were good, and as for peel strength, initial adhesion was good and adhesion after aging was extremely good. The results are shown in Table 3.

### [Example 19]

The laminates were made by UV curing according to the laminate production method 2 using an active energy ray-curable adhesive composition 16 as the active energy ray-curable adhesive composition and a substrate film 1 as the film. Both appearance and flexibility of the coating film were excellent, and as for peel strength, initial adhesion was good and adhesion after aging was extremely good. The results are shown in Table 3.

### [Example 20]

The laminates were made according to the laminate production method 3 using an active energy ray-curable adhesive composition 6 as the active energy ray-curable adhesive compositions and a substrate film 1 as the film. It was observed that irradiation with electron beam prior to lamination improved the initial adhesion due to accelerated curing. The final laminate peel strength was very good, comparable to Example 6. The results are shown in Table 3.

### [Comparative Examples 1 to 4]

The laminates were made according to the laminate production method 1 using active energy ray-curable adhesive compositions 17 to 20 as the active energy ray-curable adhesive compositions and a substrate film 1 as the film. Among Comparative Examples 1 to 4, in Comparative Example 1 using a conjugated diene polymer which was solid at 25°C and 1 atm instead of a conjugated diene polymer (A) which was liquid at 25°C and 1 atm, the appearance of the coating film was poor due to the non-uniformity of the active energy ray-curable adhesive composition, and flexibility of the coating film was inferior to those of Examples 1 to 6 with the same content. The initial adhesion was also insufficient. Comparative Example 2 which does not contain the polyfunctional (meth)acrylate (B) component showed insufficient curability, and insufficient appearance of the coating film due to high viscosity. Comparative Example 3 free of the conjugated diene polymer (A) which is liquid at 25°C and 1 atm showed insufficient flexibility of the coating film and insufficient initial adhesion. In Comparative Example 4 free of the polyol compound (C) and the polyisocyanate compound (D) component, adhesion after aging was insufficient. The results are shown in Table 3.

### [Table 2]

**Table 2**

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Active energy ray-curable adhesive composition | 1 | 2 | 3 | 4 | 5 | 6 | 7 | 8 | 9 | 10 | 11 | 12 |
| Substrate film | 1 | 1 | 1 | 1 | 1 | 1 | 1 | 1 | 1 | 1 | 1 | 1 |
| Heat sealable film | 4 | 4 | 4 | 4 | 4 | 4 | 4 | 4 | 4 | 4 | 4 | 4 |
| Production method of laminate | 1 | 1 | 1 | 1 | 1 | 1 | 1 | 1 | 1 | 1 | 1 | 1 |
| Appearance of coating film | A | A | A | A | B | A | A | A | B | C | A | A |
| Flexibility of coating film | A | A | A | A | A | A | B | A | A | A | B | A |
| Initial adhesion (N/15 mm) | 0.7 | 0.7 | 0.8 | 1.5 | 1.2 | 1.4 | 0.5 | 0.6 | 1.0 | 0.8 | 0.8 | 1.5 |
| Adhesion after aging (N/15 mm) | 4.4 | 4.1 | 4.4 | 4.8 | 4.8 | 5.2 | 6.4 | 5.9 | 3.8 | 3.7 | 4.5 | 4.5 |
| Failure mode | A | A | A | A | A | A | A | A | A | A | A | A |
| Ratio (A)/(B) | 0.14 | 0.11 | 0.14 | 0.19 | 0.15 | 0.22 | 0.05 | 0.07 | 0.29 | 0.38 | 0.19 | 0.18 |
| Ratio (C)/(B) | 0.00 | 0.00 | 0.00 | 0.00 | 0.00 | 0.00 | 0.00 | 0.00 | 0.00 | 0.00 | 0.00 | 0.00 |

### [Table 3]

**Table 3**

| | Example | | | | | | | | Comparative Example | | | |
|---|---|---|---|---|---|---|---|---|---|---|---|---|
| | 13 | 14 | 15 | 16 | 17 | 18 | 19 | 20 | 1 | 2 | 3 | 4 |
| Active energy ray-curable adhesive composition | 13 | 14 | 15 | 6 | 6 | 6 | 16 | 6 | 17 | 18 | 19 | 20 |
| Substrate film | 1 | 1 | 1 | 2 | 3 | 4 | 1 | 1 | 1 | 1 | 1 | 1 |
| Heat sealable film | 4 | 4 | 4 | 4 | 4 | 4 | 4 | 4 | 4 | 4 | 4 | 4 |
| Laminate production method | 1 | 1 | 1 | 1 | 1 | 1 | 2 | 3 | 1 | 1 | 1 | 1 |
| Appearance of coating film | B | B | A | A | A | A | A | A | C | C | A | C |
| Flexibility of coating film | A | A | A | A | A | A | A | A | B | A | C | A |
| Initial adhesion (N/15 mm) | 2.5 | 2.1 | 0.5 | 1.4 | 1.2 | 1.5 | 1.1 | 2.2 | 0.2 | 0.3 | 0.1 | 0.1 |
| Adhesion after aging (N/15 mm) | 6.3 | 6.0 | 3.1 | 5.4 | 5.6 | 5.1 | 4.9 | 5.8 | 4.6 | 3.3 | 3.5 | 0.1 |
| Failure mode | A | A | B | A | A | A | A | A | A | B | B | C |
| Ratio (A)/(B) | 0.19 | 0.19 | 0.27 | 0.19 | 0.18 | 0.18 | 0.17 | 0.18 | 0.02 | 0.56 | 0.02 | 0.53 |
| Ratio (C)/(B) | 0.00 | 0.00 | 0.00 | 0.00 | 0.00 | 0.00 | 0.00 | 0.00 | 0.00 | 0.00 | 0.00 | 0.00 |

### [Example 21]

A laminate was prepared according to the laminate production method 1 using a substrate film 4, a heat sealable film 1, and an active energy ray-curable adhesive composition 21. All polyolefin layers in this laminate are prepared using polypropylene resins. As for peel strength, initial adhesion was 0.5 N/15 mm, which was good, and adhesion after aging was 4.3 N/15 mm, which was extremely good. In addition, the failure mode was good (A), and the evaluation results of appearance and flexibility of the coating film were good. The results are shown in Table 4.

### [Example 22, Example 23]

A laminate was prepared according to the laminate production method 1 using a substrate film 4, a heat sealable film 1, and an active energy ray-curable adhesive composition 22 Example 22) or an adhesive composition 23 (Example 23). All polyolefin layers in this laminate are prepared using polypropylene resins. In Examples 22 and 23, initial adhesion was better than that in Example 21, and adhesion after aging was extremely good. In addition, the failure mode was good (A), and the evaluation results of both appearance and flexibility of the coating film were good. In addition, in Example 22, the peak derived from nitrile group was observed in the range from 2,100 to 2,300 cm⁻¹. The ratio ((C)/(B)) of the maximum peak height (C) to the maximum peak height (B) in the range of 1,700 to 1,750 cm⁻¹ was 0.30. The results are shown in Table 4.

### [Example 24]

A laminate was prepared according to the production method 1 using a substrate film 5, a heat sealable film 2, and an active energy ray-curable adhesive composition 21. All polyolefin layers in this laminate are prepared using polyethylene resins. As for peel strength, initial adhesion was 0.6 N/15 mm, which was good, and adhesion after aging was 4.2 N/15 mm, which was extremely good. In addition, the failure mode was good (A), and the evaluation results of appearance and flexibility of the coating film were good. The results are shown in Table 4.

### [Example 25]

A laminate was prepared according to the production method 1 using a substrate film 6, a heat sealable film 3, and an active energy ray-curable adhesive composition 21. All polyolefin layers in this laminate are prepared using polypropylene resins. As for peel strength, initial adhesion was 0.6 N/15 mm, which was good, and adhesion after aging was 4.4 N/15 mm, which was extremely good. In addition, the failure mode was good (A), and the evaluation results of appearance and flexibility of the coating film were good. The results are shown in Table 4.

### [Example 26]

A laminate was prepared according to the production method 1 using a substrate film 7, a heat sealable film 2, and an active energy ray-curable adhesive composition 21. All polyolefin layers in this laminate are prepared using polyethylene resins. As for peel strength, initial adhesion was 0.6 N/15 mm, which was good, and adhesion after aging was 4.4 N/15 mm, which was extremely good. In addition, the failure mode was good (A), and appearance and flexibility of the coating film were good. The results are shown in Table 4.

### [Example 27]

A laminate was prepared according to the production method 1 using a substrate film 6, a heat sealable film 2, and an active energy ray-curable adhesive composition 21. As for peel strength, initial adhesion was 0.6 N/15 mm, which was good, and adhesion after aging was 4.3 N/15 mm, which was extremely good. In addition, the failure mode was good (A), and the evaluation results of appearance of and flexibility of the coating film were excellent. The results are shown in Table 4.

### [Comparative Example 5]

A laminate was prepared according to the laminate production method 1 using a substrate film 4, a heat sealable film 1, and an active energy ray-curable adhesive composition 24. All polyolefin layers in this laminate are prepared using polypropylene resins. As for peel strength, initial adhesion was 0.1 N/15 mm, which was insufficient. The adhesion after aging was 3.4 N/15 mm, which was good. The failure mode was cohesive failure (B), and although appearance of the coating film was excellent, flexibility of the coating film was evaluated as poor (C). The results are shown in Table 4.

### [Comparative Example 6]

A laminate was prepared according to the laminate production method 1 using a substrate film 4, a heat sealable film 1, and an active energy ray-curable adhesive composition 25. All polyolefin layers in this laminate are prepared using polypropylene resins. As for peel strength, initial adhesion was 0.1 N/15 mm, which was insufficient. The adhesion after aging was 2.6 N/15 mm, which was also insufficient. The failure mode was peeling at the interface (C), and although appearance of the coating film was excellent, flexibility of the coating film was evaluated as poor (C). The results are shown in Table 4.

### [Table 4]

**Table 4**

| | Example | | | | | | | Comparative Example | |
|---|---|---|---|---|---|---|---|---|---|
| | 21 | 22 | 23 | 24 | 25 | 26 | 27 | 5 | 6 |
| Active energy ray-curable adhesive composition | 21 | 22 | 23 | 21 | 21 | 21 | 21 | 24 | 25 |
| Substrate film | 4 | 4 | 4 | 5 | 6 | 7 | 6 | 4 | 4 |
| Heat sealable film | 1 | 1 | 1 | 2 | 3 | 2 | 2 | 1 | 1 |
| Laminate production method | 1 | 1 | 1 | 1 | 1 | 1 | 1 | 1 | 1 |
| Appearance of coating film | A | A | A | A | A | A | A | A | A |
| Flexibility of coating film | A | A | A | A | A | A | A | C | C |
| Initial adhesion (N/15 mm) | 0.5 | 1.0 | 1.1 | 0.6 | 0.6 | 0.6 | 0.6 | 0.1 | 0.1 |
| Adhesion after aging (N/15 mm) | 4.3 | 4.7 | 4.6 | 4.2 | 4.4 | 4.4 | 4.3 | 3.4 | 2.6 |
| Failure mode | A | A | A | A | A | A | A | B | C |
| Ratio (A)/(B) | 0.17 | 0.16 | 0.25 | 0.18 | 0.17 | 0.17 | 0.17 | 0.02 | 0.04 |
| Ratio (C)/(B) | 0.00 | 0.30 | 0.00 | 0.00 | 0.00 | 0.00 | 0.00 | 0.00 | 0.00 |

For the laminates of Examples 21 to 27, the surfaces with a heat sealable film applied thereon were overlapped and heat-sealed under conditions of 135°C at the top, 80°C at the bottom, at 0.1 MPa, for 1 second when the heat sealable film was CPP; and 105°C at the top, 80°C at the bottom, at 0.1 MPa, for 1 second when the heat sealable film was LLDPE. Then, it was confirmed that laminates had good heat sealability for use as packaging materials.

## Claims

1. An active energy ray-curable adhesive composition comprising: a conjugated diene polymer (A) which is liquid at 25°C and 1 atm; a polyfunctional (meth)acrylate (B); a polyol compound (C); and a polyisocyanate compound (D).

2. The active energy ray-curable adhesive composition according to claim 1, wherein the conjugated diene polymer (A) has a (meth)acryloyl group.

3. The active energy ray-curable adhesive composition according to claim 1 or 2, wherein the polyfunctional (meth)acrylate (B) has a tert-amino group.

4. The active energy ray-curable adhesive composition according to any one of claims 1 to 3, wherein the polyfunctional (meth)acrylate (B) is di(meth)acrylate having an alicyclic skeleton or di(meth)acrylate having 9 to 18 carbon atoms.

5. The active energy ray-curable adhesive composition according to claim 4, wherein the di(meth)acrylate having an alicyclic skeleton is tricyclodecanedimethanol di(meth)acrylate.

6. The active energy ray-curable adhesive composition according to any one of claims 1 to 5, wherein a glass transition temperature (Tg) of the conjugated diene polymer (A) is -80°C or more and -20°C or less.

7. The active energy ray-curable adhesive composition according to any one of claims 1 to 6, wherein a weight average molecular weight of the conjugated diene polymer (A) is 10,000 or more and 50,000 or less.

8. The active energy ray-curable adhesive composition according to any one of claims 1 to 7, wherein 5 mass% or more and 30 mass% or less of the conjugated diene polymer (A) is contained in the active energy ray-curable adhesive composition.

9. The active energy ray-curable adhesive composition according to any one of claims 1 to 8, wherein the total content of the polyol compound (C) and the polyisocyanate compound (D) is 50 mass% or more and 80 mass% or less, taking a mass of the active energy ray-curable adhesive composition as 100 mass%.

10. The active energy ray-curable adhesive composition according to any one of claims 1 to 9, wherein the active energy ray-curable adhesive composition is substantially free of solvent and monofunctional (meth)acrylate.

11. A production method of a laminate, comprising the following steps in this order:
a lamination step of bonding the same or different types of films together via the active energy ray-curable adhesive composition according to any one of claims 1 to 10 to form a laminated film;
an irradiation step of irradiating the laminated film with an active energy ray; and
an aging step of aging the film irradiated with the active energy ray.

12. A production method of a laminate, comprising the following steps in this order:
a step of applying the active energy ray-curable adhesive composition according to any one of claims 1 to 10 onto a film;
an irradiation step of irradiating the film with the adhesive composition applied thereon with an active energy ray;
a lamination step of laminating and bonding the same or different types of films on a surface of the film irradiated with the active energy ray, the surface having the adhesive composition applied thereon, to form a laminated film; and
an aging step of aging the laminated film.

13. The production method of a laminate, according to claim 11 or 12, wherein the active energy ray is an electron beam.

14. A laminate comprising at least a first resin layer mainly composed of a resin; a second resin layer mainly composed of polyolefin as a resin component; and a layer mainly composed of a resin that exists between the first resin layer and the second resin layer (the layer is referred to as a "first intermediate layer"),
wherein the second resin layer has a melting point lower than that of the first resin layer, the first intermediate layer includes at least polyurethane, a compound having an aliphatic carbon-carbon double bond, and poly(meth)acrylate, and a ratio (A)/(B) of the maximum peak height (A) in a range from 1,600 to 1,650 cm⁻¹ to the maximum peak height (B) in a range from 1,700 to 1,750 cm⁻¹ is 0.05 or more and 0.40 or less in the transmission infrared spectroscopic measurement of the laminate.

15. The laminate according to claim 14, wherein the first resin layer is mainly composed of polyolefin.

16. The laminate according to claim 14 or 15, wherein the compound having an aliphatic carbon-carbon double bond is a conjugated diene polymer.

17. A laminate according to any one of the claim 14 to 16, wherein the first resin layer has an ink print applied onto at least one surface thereof.

18. A packaging material using the laminate according to any one of claims 14 to 17, wherein the packaging material is formed by bonding in the second resin layer.
